# EUROPEAN PATENT SPECIFICATION

(11) **EP 4 595 415 B1**
(45) Date of publication and mention of the grant of the patent: **09.12.2026**
(21) Application number: 22786555.7
(22) Date of filing: 28.09.2022
(51) Int. Cl.: H04L 67/12, H04L 67/51, H04L 69/22

(54) **RECEIVING AND TRANSMITTING A COAP MESSAGE**
EMPFANGEN UND SENDEN EINER COAP-NACHRICHT
RÉCEPTION ET TRANSMISSION D'UN MESSAGE COAP

(43) Date of publication of application: 06.08.2025
(73) Proprietor: Telefonaktiebolaget LM Ericsson (publ), 164 83 Stockholm (SE)
(72) Inventor: JIMÉNEZ, Jaime, 02780 ESPOO (FI); SALMELA, Patrik, 02230 ESPOO (FI)
(74) Representative: Ericsson
(86) International application number: PCT/SE2022/050862
(87) International publication number: WO 2024/072267

(56) References cited:
- US-A1- 2017 373 804
- SHELBY K HARTKE C BORMANN UNIVERSITAET BREMEN TZI Z: "The Constrained Application Protocol (CoAP); rfc7252.txt", THE CONSTRAINED APPLICATION PROTOCOL (COAP); RFC7252.TXT, INTERNET ENGINEERING TASK FORCE, IETF; STANDARD, INTERNET SOCIETY (ISOC) 4, RUE DES FALAISES CH- 1205 GENEVA, SWITZERLAND, 27 June 2014 (2014-06-27), pages 1 - 112, XP015100722

## Description

### TECHNICAL FIELD

The invention relates to a receiver for receiving a Constrained Application Protocol, CoAP, message, a transmitter for providing a CoAP message comprising a header, corresponding methods, corresponding computer programs, and a corresponding computer readable storage medium.

### BACKGROUND

Constrained Application Protocol, CoAP, is a generic Representational State Transfer, REST, application protocol for constrained devices, such as Internet-of-Things, IoT, devices. CoAP is designed to be used over a transport layer protocol (for example User Datagram Protocol (UDP), or Transmission Control Protocol (TCP)) over the Internet. According to Internet Engineering Task Force, IETF Request For Comments, RFC 7252, CoAP uses a short fixed-length binary header of 4 bytes, and a payload, such as represented in Table 1.

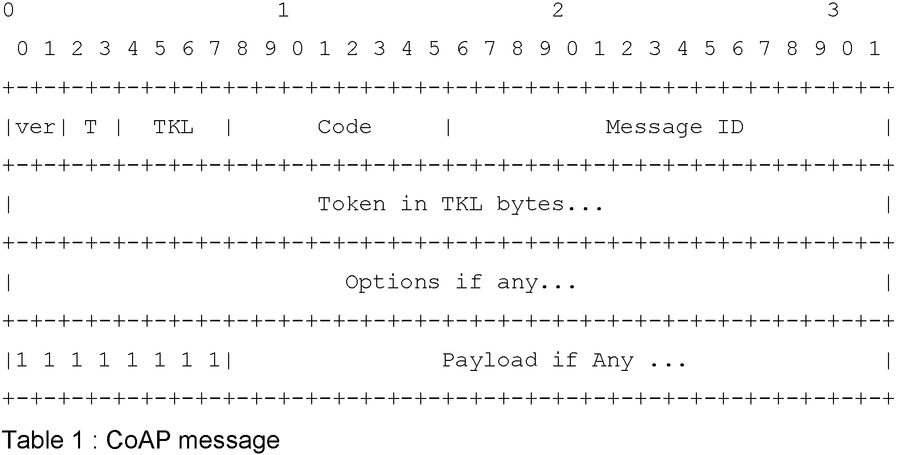

CoAP is mainly but not exclusively intended for a UDP transmission. The UDP transmission is unreliable, which results in CoAP request messages and CoAP response messages arriving eventually out of order, appearing duplicated, or missing without notice. For this reason, CoAP implements a lightweight reliability mechanism using four different message types, including "confirmable" and "non-confirmable" messages. If the request or response message is confirmable, CON, the request message or the response message requires an acknowledgement, ACK.

An application using CoAP has to use dedicated mechanisms for measuring and obtaining time synchronization. Time synchronization solutions, in prior art, are implemented in CoAP payload.

US2017373804A1 discloses delay-aware CoAP messaging using Delaylndicator options in requests, ACKs and responses to support delayed responses, response timers, multicast aggregation and request cancellation.

### SUMMARY

An object of the invention is to improve time synchronization in a CoAP communication, preferably in a very low latency requirement communication.

According to a first aspect of the invention, a receiver in a network for receiving a first CoAP message is provided. The receiver is configured to receive, from a transmitter in the network, the first CoAP message, the first CoAP message comprising a modified header field indicating a time indication value, wherein the time indication value is generated by the transmitter. The receiver is configured to evaluate network latency or network load based on the time indication value. A possible advantage is improvement of time synchronization in a CoAP communication. Another possible advantage is to reduce overhead. Indeed, the time indication value, herein disclosed, may be present on every message with no additional message overhead. Another advantage is improved monitoring of network latency and/or processing time.

According to an embodiment of the first aspect, the receiver is configured to generate an update time indication value; and send, to the transmitter, a second CoAP message, the second CoAP message comprising a modified header field indicating the updated time indication value.

According to an embodiment of the first aspect, the modified header field of the first CoAP message is a message identity, MID, header field.

According to an embodiment of the first aspect, the modified header field of the second CoAP message is a message identity, **MID,** header field.

According to an embodiment of the first aspect, the first CoAP message is a CoAP request message or a CoAP response message.

According to an embodiment of the first aspect, the second CoAP message is a CoAP request message or a CoAP response message.

According to an embodiment of the first aspect, the time indication value corresponds to a quantity of time passed from a common start of a session.

According to an embodiment of the first aspect, the updated time indication value corresponds to a quantity of time passed from the common start of a session.

According to an embodiment of the first aspect, the time indication value includes 5 bits corresponding to a quantity of days, and/or 5 bits corresponding to a quantity of hours, and/or 6 bits corresponding to a quantity of minutes.

According to an embodiment of the first aspect, the updated time indication value includes 5 bits corresponding to a quantity of days, and/or 5 bits corresponding to a quantity of hours, and/or 6 bits corresponding to a quantity of minutes.

According to an embodiment of the first aspect, the time indication value includes 6 bits corresponding to a quantity of second, and/or 10 bits corresponding to a quantity of milliseconds.

According to an embodiment of the first aspect, the updated time indication value includes 6 bits corresponding to a quantity of second, and/or 10 bits corresponding to a quantity of milliseconds.

According to an embodiment of the first aspect, the time indication value is calculated by a modulus operation on the time indication value.

According to an embodiment of the first aspect, the receiver is configured to receive a third CoAP message comprising an Option indicating that the time indication value is calculated by modulus operation.

According to an embodiment of the first aspect, the first CoAP message includes a CoAP Option indicating that the time indication value is calculated by modulus operation.

According to an embodiment of the first aspect, the updated time indication value is calculated by a modulus operation on the updated indicated time value.

According to an embodiment of the first aspect, the receiver is configured to send a fourth CoAP message comprising an Option indicating that the time indication value is calculated by modulus operation.

According to an embodiment of the first aspect, the second CoAP message includes a CoAP Option indicating that the updated time indication value is calculated by modulus operation.

According to an embodiment of the first aspect, the first CoAP message includes a request to use the modified header field.

According to an embodiment of the first aspect, the receiver is configured to receive, from the transmitter, a fifth CoAP message comprising an Option indicating that: a time indication value is used, how the time indication value is generated, and the common start of a session; and send, to the transmitter, a sixth CoAP message indicating whether the receiver is using a time indication value in subsequent messages.

According to an embodiment of the first aspect, the sixth CoAP message is an acknowledgment, ACK, message, a CoAP response message, or a CoAP request message.

According to a second aspect of the invention, a transmitter in a network for providing a first CoAP message comprising a header is provided. The transmitter is configured to generate a time indication value. The transmitter is configured to include the time indication value in a header field of the header of the first CoAP message, generating a modified header field. The transmitter is configured to transmit, to a receiver in the network, the first CoAP message comprising the modified header field.

According to an embodiment of the second aspect, the transmitter is configured to receive, from the receiver, a second CoAP message, the second CoAP message comprises a modified header field indicating an updated time indication value; and evaluate network latency or network load at the receiver based on the updated time indication value.

According to an embodiment of the second aspect, the modified header field of the first CoAP message is a message identity, **MID,** header field.

According to an embodiment of the second aspect, the modified header field of the second CoAP message is a message identity, **MID,** header field.

According to an embodiment of the second aspect, the first CoAP message is a CoAP request message or a CoAP response message.

According to an embodiment of the second aspect, the second CoAP message is a CoAP request message or a CoAP response message.

According to an embodiment of the second aspect, the time indication value corresponds to a quantity of time passed from a common start of the session.

According to an embodiment of the second aspect, the updated time indication value corresponds to a quantity of time passed from the common start of the session.

According to an embodiment of the second aspect, the time indication value includes 5 bits corresponding to a quantity of days, and/or 5 bits corresponding to a quantity of hours, and/or 6 bits corresponding to a quantity of minutes.

According to an embodiment of the second aspect, the updated time indication value includes 5 bits corresponding to a quantity of days, and/or 5 bits corresponding to a quantity of hours, and/or 6 bits corresponding to a quantity of minutes.

According to an embodiment of the second aspect, the time indication value includes 6 bits corresponding to a quantity of second, and/or 10 bits corresponding to a quantity of milliseconds.

According to an embodiment of the second aspect, the updated time indication value includes 6 bits corresponding to a quantity of second, and/or 10 bits corresponding to a quantity of milliseconds.

According to an embodiment of the second aspect, the time indication value is calculated by a modulus operation on the time indication value.

According to an embodiment of the second aspect, the updated time indication value is calculated by a modulus operation on the time indication value.

According to an embodiment of the second aspect, the transmitter is configured to send, to the receiver, a third CoAP message comprising an Option indicating that the time indication value is calculated by modulus operation.

According to an embodiment of the second aspect, the first CoAP message includes a CoAP option indicating that the time indication value is calculated by modulus operation.

According to an embodiment of the second aspect, the transmitter is configured to receive, from the receiver, a fourth CoAP message comprising an Option indicating that the updated time indication value is calculated by modulus operation.

According to an embodiment of the second aspect, the second CoAP message includes a CoAP Option indicating that the updated time indication value is calculated by modulus operation.

According to an embodiment of the second aspect, the first CoAP message includes a request to use the modified header field.

According to an embodiment of the second aspect, the transmitter is configured to send, to the receiver, a fifth CoAP message comprising an Option indicating that: a time indication value is used, how the time indication value is generated, and the common start of a session; and receive, from the receiver, a sixth CoAP message indicating whether the receiver is using a time indication value in subsequent messages.

According to an embodiment of the second aspect, the sixth CoAP message is an acknowledgment, ACK, message, a CoAP request message, or a CoAP response message.

According to a third aspect of the invention, a method, performed by a receiver in a network, for receiving a first CoAP message is provided. The method comprises receiving, from a transmitter in the network, the first CoAP message, the first CoAP message comprising a modified header field indicating a time indication value, wherein the time indication value is generated by the transmitter. The method comprises evaluating network latency or network load based on the time indication value.

According to an embodiment of the third aspect, the method comprises generating an update time indication value; and sending, to the transmitter, a second CoAP message, the second CoAP message comprising a modified header field indicating the updated time indication value.

According to an embodiment of the third aspect, the modified header field of the first CoAP message is a message identity, **MID,** header field.

According to an embodiment of the third aspect, the updated modified header field of the second CoAP message is a message identity, **MID,** header field.

According to an embodiment of the third aspect, the first CoAP message is a CoAP request message or a CoAP response message.

According to an embodiment of the third aspect, the second CoAP message is a CoAP request message or a CoAP response message.

According to an embodiment of the third aspect, the time indication value corresponds to a quantity of time passed from a common start of a session.

According to an embodiment of the third aspect, the updated time indication value corresponds to a quantity of time passed from the common start of a session.

According to an embodiment of the third aspect, the time indication value includes 5 bits corresponding to a quantity of days, and/or 5 bits corresponding to a quantity of hours, and/or 6 bits corresponding to a quantity of minutes.

According to an embodiment of the third aspect, the updated time indication value includes 5 bits corresponding to a quantity of days, and/or 5 bits corresponding to a quantity of hours, and/or 6 bits corresponding to a quantity of minutes.

According to an embodiment of the third aspect, the time indication value includes 6 bits corresponding to a quantity of second, and/or 10 bits corresponding to a quantity of milliseconds.

According to an embodiment of the third aspect, the updated time indication value includes 6 bits corresponding to a quantity of second, and/or 10 bits corresponding to a quantity of milliseconds.

According to an embodiment of the third aspect, the time indication value is calculated by a modulus operation on the time indication value.

According to an embodiment of the third aspect, the method comprises receiving a third CoAP message comprising an Option indicating that the time indication value calculated by modulus operation.

According to an embodiment of the third aspect, the first CoAP message includes a CoAP Option indicating that the time indication value is calculated by modulus operation.

According to an embodiment of the third aspect, the updated time indication value is calculated by a modulus operation on the updated indicated time value.

According to an embodiment of the third aspect, the method comprises sending a fourth CoAP message comprising an Option indicating that the time indication value is calculated by modulus operation.

According to an embodiment of the third aspect, the second CoAP message includes a CoAP Option indicating that the updated time indication value is calculated by modulus operation.

According to an embodiment of the third aspect, the first CoAP message includes a request to use the modified header field.

According to an embodiment of the third aspect, the method comprises receiving, from the transmitter, a fifth CoAP message comprising an Option indicating that: a time indication value is used, how the time indication value is generated, and the common start of a session; and sending, to the transmitter, a sixth CoAP message indicating whether the receiver is using a time indication value in subsequent messages.

According to an embodiment of the third aspect, the sixth CoAP message is an acknowledgment, ACK, message, a CoAP response message, or a CoAP request message.

According to a fourth aspect of the invention, a method performed by a transmitter in a network for providing a first CoAP message comprising a header is provided. The method comprises generating a time indication value. The method comprises including the time indication value in a header field of the header of the first CoAP message, generating a modified header field. The method comprises transmitting, to a receiver in the network, the first CoAP message comprising the modified header field.

According to an embodiment of the fourth aspect, the method comprises receiving, from the receiver, a second CoAP message, the second CoAP message comprising a modified header field indicating an updated time indication value; and evaluating network latency or network load based on the updated time indication value.

According to an embodiment of the fourth aspect, the modified header field of the first CoAP message is a message identity, **MID,** header field.

According to an embodiment of the fourth aspect, the modified header field of the second CoAP message is a message identity, **MID,** header field.

According to an embodiment of the fourth aspect, the first CoAP message is a CoAP request message or a CoAP response message.

According to an embodiment of the fourth aspect, the second CoAP message is a CoAP request message or a CoAP response message.

According to an embodiment of the fourth aspect, the time indication value corresponds to a quantity of time passed from a common start of the session.

According to an embodiment of the fourth aspect, the updated time indication value corresponds to a quantity of time passed from the common start of the session.

According to an embodiment of the fourth aspect, the time indication value includes 5 bits corresponding to a quantity of days, and/or 5 bits corresponding to a quantity of hours, and/or 6 bits corresponding to a quantity of minutes.

According to an embodiment of the fourth aspect, the updated time indication value includes 5 bits corresponding to a quantity of days, and/or 5 bits corresponding to a quantity of hours, and/or 6 bits corresponding to a quantity of minutes.

According to an embodiment of the fourth aspect, the time indication value includes 6 bits corresponding to a quantity of second, and/or 10 bits corresponding to a quantity of milliseconds.

According to an embodiment of the fourth aspect, the updated time indication value includes 6 bits corresponding to a quantity of second, and/or 10 bits corresponding to a quantity of milliseconds.

According to an embodiment of the fourth aspect, the time indication value is calculated by a modulus operation on the time indication value.

According to an embodiment of the fourth aspect, the updated time indication value is calculated by a modulus operation on the time indication value.

According to an embodiment of the fourth aspect, the transmitter is configured to send, to the receiver, a third CoAP message comprising an Option indicating that the time indication value is calculated by modulus operation.

According to an embodiment of the fourth aspect, the method comprises receiving, from the receiver, a fourth CoAP message comprising an Option indicating that the updated time indication value is calculated by modulus operation.

According to an embodiment of the fourth aspect, the first CoAP message includes a CoAP Option indicating that the time indication value is calculated by modulus operation.

According to an embodiment of the fourth aspect, the second CoAP message includes a CoAP Option indicating that the updated time indication value is calculated by modulus operation.

According to an embodiment of the fourth aspect, the first CoAP message includes a request to use the modified header field.

According to an embodiment of the fourth aspect, the method comprises sending, to the receiver, a fifth CoAP message comprising an Option indicating that: a time indication value is used, how the time indication value is generated, and the common start of a session; and receiving, from the receiver, a sixth CoAP message indicating whether the receiver is using a time indication value in subsequent messages.

According to an embodiment of the fourth aspect, the sixth CoAP message is an acknowledgment, ACK, message, a CoAP request message, or a CoAP response message.

According to a fifth aspect of the invention, a computer program is provided. The computer program comprises instructions, which when executed by a receiver in a network, for receiving a first CoAP message, causes the receiver to receive, from a transmitter in the network, the first CoAP message, the first CoAP message comprising a modified header field indicating a time indication value, wherein the time indication value is generated by the transmitter. The instructions, when executed, causes the receiver to evaluate network latency or network load based on the time indication value.

According to an embodiment of the fifth aspect, the instructions, when executed on the receiver, causes the receiver to generate an update time indication value; and send, to the transmitter, a second CoAP message, the second CoAP message comprising a modified header field indicating the updated time indication value.

According to an embodiment of the fifth aspect, the modified header field of the first CoAP message is a message identity, **MID,** header field.

According to an embodiment of the fifth aspect, the modified header field of the second CoAP message is a message identity, **MID,** header field.

According to an embodiment of the fifth aspect, the first CoAP message is a CoAP request message or a CoAP response message.

According to an embodiment of the fifth aspect, the second CoAP message is a CoAP request message or a CoAP response message.

According to an embodiment of the fifth aspect, the time indication value corresponds to a quantity of time passed from a common start of a session.

According to an embodiment of the fifth aspect, the updated time indication value corresponds to a quantity of time passed from the common start of a session.

According to an embodiment of the fifth aspect, the time indication value includes 5 bits corresponding to a quantity of days, and/or 5 bits corresponding to a quantity of hours, and/or 6 bits corresponding to a quantity of minutes.

According to an embodiment of the fifth aspect, the updated time indication value includes 5 bits corresponding to a quantity of days, and/or 5 bits corresponding to a quantity of hours, and/or 6 bits corresponding to a quantity of minutes.

According to an embodiment of the fifth aspect, the time indication value includes 6 bits corresponding to a quantity of second, and/or 10 bits corresponding to a quantity of milliseconds.

According to an embodiment of the fifth aspect, the updated time indication value includes 6 bits corresponding to a quantity of second, and/or 10 bits corresponding to a quantity of milliseconds.

According to an embodiment of the fifth aspect, the time indication value is calculated by a modulus operation on the time indication value.

According to an embodiment of the fifth aspect, the instructions, when executed on the receiver, causes the receiver to receive a third CoAP message comprising an Option indicating that the time indication value calculated by modulus operation.

According to an embodiment of the fifth aspect, the first CoAP message includes a CoAP Option indicating that the time indication value is calculated by modulus operation.

According to an embodiment of the fifth aspect, the updated time indication value is calculated by a modulus operation on the updated indicated time value.

According to an embodiment of the fifth aspect, the instructions, when executed on the receiver, causes the receiver to send a fourth CoAP message comprising an Option indicating that the time indication value is calculated by modulus operation.

According to an embodiment of the fifth aspect, the second CoAP message includes a CoAP Option indicating that the updated time indication value is calculated by modulus operation.

According to an embodiment of the fifth aspect, the first CoAP message includes a request to use the modified header field.

According to an embodiment of the fifth aspect, the instructions, when executed on the receiver, causes the receiver to receive, from the transmitter, a fifth CoAP message comprising an Option indicating that: a time indication value is used, how the time indication value is generated, and the common start of a session; and send, to the transmitter, a sixth CoAP message indicating whether the receiver is using a time indication value in subsequent messages.

According to an embodiment of the fifth aspect, the sixth CoAP message is an acknowledgment, ACK, message, a CoAP response message, or a CoAP request message.

According to a sixth aspect of the invention, a computer program is provided. The computer program comprises instructions, which when executed by a transmitter in a network, for providing a first CoAP message, causes the transmitter to generate a time indication value. The transmitter is configured to include the time indication value in a header field of the header of the first CoAP message, generating a modified header field. The instructions, when executed, causes the receiver to transmit, to a receiver in the network, the first CoAP message comprising the modified header field.

According to an embodiment of the sixth aspect, the instructions, when executed on the transmitter, causes the transmitter to receive, from the receiver, a second CoAP message, the second CoAP message comprises a modified header field indicating an updated time indication value; and evaluate network latency or network load at the receiver based on the updated time indication value.

According to an embodiment of the sixth aspect, the modified header field of the first CoAP message is a message identity, **MID,** header field.

According to an embodiment of the sixth aspect, the modified header field of the second CoAP message is a message identity, **MID,** header field.

According to an embodiment of the sixth aspect, the first CoAP message is a CoAP request message or a CoAP response message.

According to an embodiment of the sixth aspect, the second CoAP message is a CoAP request message or a CoAP response message.

According to an embodiment of the sixth aspect, the time indication value corresponds to a quantity of time passed from a common start of the session.

According to an embodiment of the sixth aspect, the updated time indication value corresponds to a quantity of time passed from the common start of the session.

According to an embodiment of the sixth aspect, the time indication value includes 5 bits corresponding to a quantity of days, and/or 5 bits corresponding to a quantity of hours, and/or 6 bits corresponding to a quantity of minutes.

According to an embodiment of the sixth aspect, the updated time indication value includes 5 bits corresponding to a quantity of days, and/or 5 bits corresponding to a quantity of hours, and/or 6 bits corresponding to a quantity of minutes.

According to an embodiment of the sixth aspect, the time indication value includes 6 bits corresponding to a quantity of second, and/or 10 bits corresponding to a quantity of milliseconds.

According to an embodiment of the sixth aspect, the updated time indication value includes 6 bits corresponding to a quantity of second, and/or 10 bits corresponding to a quantity of milliseconds.

According to an embodiment of the sixth aspect, the time indication value is calculated by a modulus operation on the time indication value.

According to an embodiment of the sixth aspect, the updated time indication value is calculated by a modulus operation on the time indication value.

According to an embodiment of the sixth aspect, the instructions, when executed on the transmitter, causes the transmitter to send, to the receiver, a third CoAP message comprising an Option indicating that the time indication value is calculated by modulus operation.

According to an embodiment of the sixth aspect, the first CoAP message includes a CoAP Option indicating that the time indication value is calculated by modulus operation.

According to an embodiment of the sixth aspect, the instructions, when executed on the transmitter, causes the transmitter to receive, from the receiver, a fourth CoAP message comprising an Option indicating that the updated time indication value is calculated by modulus operation.

According to an embodiment of the sixth aspect, the second CoAP message includes a CoAP Option indicating that the updated time indication value is calculated by modulus operation.

According to an embodiment of the sixth aspect, the first CoAP message includes a request to use the modified header field.

According to an embodiment of the sixth aspect, the instructions, when executed on the transmitter, causes the transmitter to send, to the receiver, a fifth CoAP message comprising an Option indicating that: a time indication value is used, how the time indication value is generated, and the common start of a session; and receive, from the receiver, a sixth CoAP message indicating whether the receiver is using a time indication value in subsequent messages.

According to an embodiment of the sixth aspect, the sixth CoAP message is an acknowledgment, ACK, message, a CoAP request message, or a CoAP response message.

According to a seventh aspect of the invention, a computer readable storage medium is provided. The computer readable storage medium comprises a computer program according to any one or more of the embodiments of the fifth aspect. The computer readable storage medium comprises a computer program according to any one or more of the embodiments of the sixth aspect.

The invention may have one or more of the following advantages.

An application using CoAP, as described in prior art, has to use dedicated mechanisms for measuring and obtaining time synchronization in a very low latency requirement use case. Time synchronization solutions, in prior art, are implemented in CoAP payload. A disadvantage of prior art solution is high messaging, leading to high cost to estimate latency on a per-message basis. An advantage of the disclosed invention is to reduce overhead.

An advantage of the invention is that overhead is reduced. The invention may save overhead in every message compared to prior art CoAP dedicated mechanisms for measuring and obtaining time synchronization, where a time indication is carried in the payload. Indeed, in prior art, a time indication (e.g., Unix time is 32 bits) can be added in the payload of a CoAP message. With the herein described invention, it is possible to reduce the payload by the number of bits used to indicate the time indication (e.g., Unix time is 32 bits).

An advantage of the invention is a time indication value is present on every message with no additional message overhead.

An advantage of the invention is improved monitoring of data flow and server status. For example, if a CoAP message seems to arrive late, it is possible to determine based on the time indication value, in the modified header field, whether the transmitter is slow in sending the message (e.g., due to server hold) or whether a problem lies in the network (i.e. message delivery by the network is slow). In particular, the invention allows to make it possible to learn if there has been a retransmission, which could be deduced based on the delay learned from the time indication value in the modified header field.

Even though advantages of the invention have in some cases been described with reference to embodiments of the first aspect, corresponding reasoning applies to embodiments of other aspects of the invention.

Further objectives of, features of, and advantages with, the invention will become apparent when studying the following detailed disclosure, the drawings, and the appended claims. Those skilled in the art realize that different features of the invention can be combined to create embodiments other than those described in the following.

### BRIEF DESCRIPTION OF THE DRAWINGS

The above, as well as additional objects, features and advantages of the invention, will be better understood through the following illustrative and non-limiting detailed description of embodiments of the invention, with reference to the appended drawings, in which:
Figure 1 shows a network in accordance with an embodiment of the invention.
Figure 2 shows a method performed by a receiver in a network for receiving a CoAP message.
Figure 3 shows a method performed by a transmitter in a network for transmitting a CoAP message comprising a header
Figure 4 shows a block diagram of a receiver in a network for receiving a CoAP message.
Figure 5 shows a block diagram of a transmitter in a network for transmitting a CoAP message comprising a header.
Figure 6 shows a block diagram of a receiver in a network for receiving a CoAP message.
Figure 7 shows a block diagram of a transmitter in a network for transmitting a CoAP message comprising a header.
Figure 8 shows an illustrative example of CoAP messages exchanged between a transmitter and receiver.

All the figures are schematic, and generally only show parts which are necessary in order to elucidate the invention, wherein other parts may be omitted or merely suggested.

### DETAILED DESCRIPTION

The invention will now be described more fully herein with reference to the accompanying drawings, in which certain embodiments are shown. This invention may, however, be embodied in many different forms and should not be construed as limited to the embodiments set forth herein. Rather, these embodiments are provided by way of example so that this disclosure will be thorough and complete. The scope of the invention is defined by the appended claims.

The invention disclosed herein may be used for improving time synchronization over CoAP.

A CoAP message includes a header and may include a payload. The header has one or more header fields as indicated in Table 1. There are four types of CoAP messages: type confirmable (CON), type non-confirmable (NON), type Acknowledgment (ACK), and type reset (RST), for example as written in RFC 7252.

A Message ID (MID) field in the CoAP header is used for reliability. Reliability is provided by marking a message from a client to a server as CON. A CON message is retransmitted using a default timeout and exponential back-off between retransmissions, until the recipient (in this case for example the server) sends an ACK message with the same MID. In Table 2, an example of a reliable transmission is provided. The MID value of the ACK message and the MID value of the CON message both match each other (the MID value in the example of Table 2 is equal to 0x7d34).

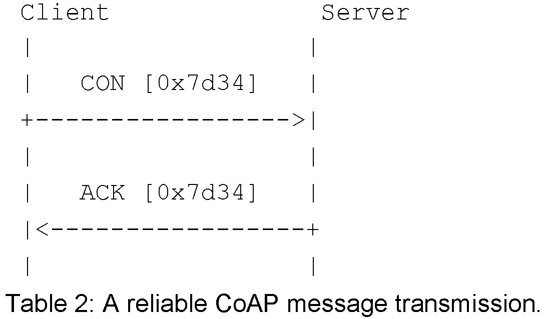

In the case the server is not able to process a CON message (i.e., not able to provide an ACK message), the server replies with a RST message instead of an ACK message.

In the case, a message does not require reliable transmission (e.g., each single measurement out of a stream of sensor data) can be sent as a NON message. The NON is not acknowledged, but still has a MID used for duplication detection. In Table 3, the MID value of the NON message is set to 0x01a0.

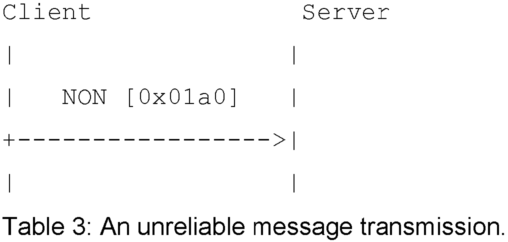

In the case, if the server is not able to process the NON message, the server may reply with a RST message, the MID value of the RST will be then matching the MID value of the NON message.

The implementation of the MID is left for a developer to decide. In prior art, the MID is generated as a random number and incremented with every exchange between CoAP client device and CoAP server.

The invention relates to a transmitter which is adapted to send and/or receive CoAP messages wherein a modified header field of the CoAP message is appended. The invention relates to a receiver which is adapted to receive and/or send CoAP messages wherein a modified header field of the CoAP message is appended. In an embodiment, the modified header field is a modified MID header field. Preferably, the modified header field is still used for reliability and detection of duplicates. In an illustrative example, the transmitter sends a first CoAP message, with a modified header field appended; and the receiver sends a second CoAP message with the same modified header field appended, then the second CoAP message sent by the receiver is a duplicate of the first CoAP message. In other words, the modified header filed may be used for detection of duplicates.

The modified MID header field may be further utilized in this invention as a timestamp. In particular, the modified MID header comprises a time indication value. The modified header field may be named MID timestamp (MIDt). The time indication value may correspond to a timestamp. The time indication value may correspond to a delta, the delta may correspond to an interval of time elapsed from a previous message received and/or transmitted, or from the start of a session, or reflect a latency requirement.

The CoAP message sent or received according to the invention may include a new CoAP Option. As shown in Table 1, the CoAP message may include one or more Options (see the field in Table 1 "Options if any"). CoAP defines a number of options that can be included in a message. Each option instance in a message specifies the Option Number of the defined CoAP option, the length of the Option Value, and the Option Value itself. The new CoAP Option may be named CoAP Option MIDt. The MIDt CoAP Option included in the CoAP messages is used to signal over CoAP communication that the time indication value is used. The CoAP Option may be used to specify how the time indication value is generated. The CoAP Option may be used to request that the receiver of the CoAP message including the new CoAP Option also uses the modified header field.

In an embodiment, the CoAP Option MIDt is elective. In an embodiment, the CoAP Option MIDt is safe to forward. In an embodiment, the CoAP Option MIDt is not part of the cache-key. In an embodiment, the CoAP Option MIDt is not repeatable. In an embodiment, the CoAP Option MIDt is used to notify to the receiver 110 and/or the transmitter 120 that exchanged CoAP messages include a modified header field generated to indicate a time indication value.

The CoAP Option MIDt is generated by the receiver 110 or the transmitter 120. In an embodiment, the CoAP Option MIDt is included in a CoAP request message, a CoAP response message, or an ACK message. The receiver 110 and/or transmitter 120 sending the CoAP Option MIDt uses their respective current UNIX time.

**Table 4: An example of a CoAP Option MIDt (the No. of this new CoAP option is still to be decided TBD).**

| No. | C | U | N | R | Name | Format | Length | Default |
|---|---|---|---|---|---|---|---|---|
| TBD | | | X | | MIDt | uint | 0-5 B | (none) |

| | | | | | | | | |
|---|---|---|---|---|---|---|---|---|
| Legend for annotation: C=critical, U=unsafe, N=no-cache-key, R=repeatable. | | | | | | | | |

In Table 4, an example of a CoAP Option MIDt is presented. Preferably, the CoAP Option MIDt includes 5 bytes. Preferably, the content of CoAP Option MIDt has 5 bytes in line, each byte comprises 8 bits. In Table 5, a representation of the CoAP Option MIDt is provided.

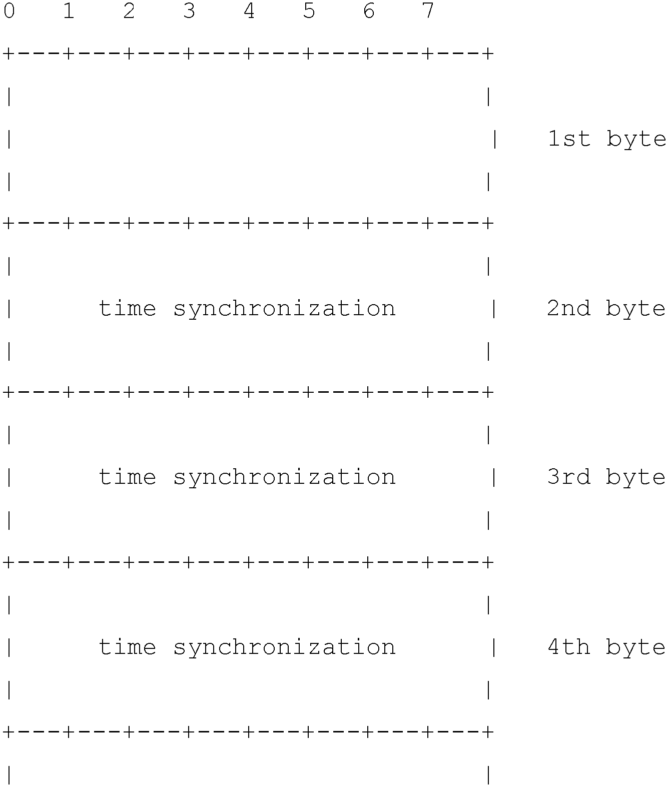

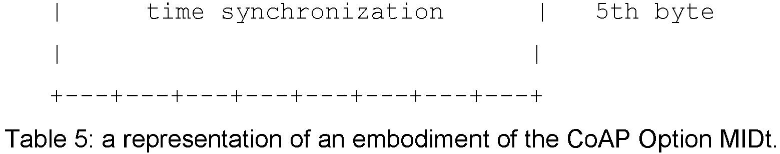

**In an illustrative** example, with reference to Table 5, the receiver 110 receives a first CoAP message comprising a CoAP Option MIDt. The first CoAP message is sent by the transmitter 120. Possible, and non-limiting, values of the content of the CoAP Option MIDt are one or more of the following:
- all bits of all bytes are equal to 0, if the modified header field is not used by the transmitter 120, nor by the receiver 110. The transmitter 120 indicates that the receiver 110 does not have to send subsequent CoAP messages comprising a modified header field, and the transmitter 120 will not process the modified header field if sent by the receiver 110.
- the first bit of the first byte may be used to signal whether the transmitter 120 is using the modified header field in subsequent messages. If the first bit of the first byte is set to 1, then the modified header field is used in subsequent messages by the transmitter 120. If the first bit of the first byte is equal to 0 (with at least one bit different from zero in the first byte), the modified header field is not used in subsequent messages by the transmitter 120.
- the second bit of the first byte may be used to signal whether the transmitter 120 requests the receiver 110 to use the modified header field. If the second bit of the first byte is set to 1, the receiver 110 is requested to use the modified header field. If the second bit of the first byte is set to 0, the receiver 110 is not requested to use the modified header field.
- the other 6 bits of the first byte besides the first bit may be used to signal different time implementation of the time indication value - for example, and not limited, 100001 indicates that the time indication value is in milliseconds, 100011 indicates the time indication value is in seconds, 000000 indicates that the time indication value is in wrap-around format as described herein below;
   o if the first bit of the first byte is 1, then the transmitter 120 uses the modified header field, and the transmitter 120 uses the time implementation of the time indication value as indicated in the other 6 bits of the first byte;
   o if the second bit of the first byte is 1, then the transmitter 120 request to the receiver 110 to use the modified header field, and to use the time implementation of the time indication value as indicated in the other 6 bits of the first byte. If the receiver 110 is not acknowledging to use the indicated implementation of the time indication value by the transmitter 120, then the receiver 110 may send a CoAP message comprising an CoAP Option MIDt indicating another implementation of the time indication value.
- all the bits of the second byte, the third byte, the fourth byte and the fifth bytes of the CoAP Option MIDt are reserved for time synchronization.

In this illustrative example, the bits are numbered from the left. However, the skilled person would understand that the bits could be as well numbered from the right.

In an embodiment, the CoAP Option MIDt comprises one or more of:
- an indication that the transmitter 120 will use the modified header field in subsequent CoAP messages;
- a request that the receiver 110 will use the modified header field in subsequent CoAP messages;
- an indication of how the time indication value is implemented.

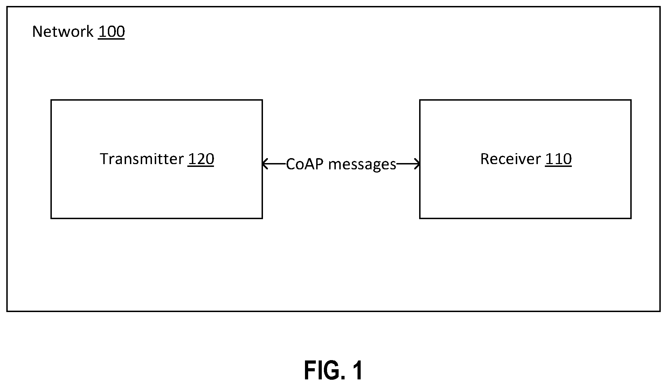

**In** **Figure 1****,** a network 100 in accordance with an embodiment of the invention is provided. In an embodiment, the network 100 is an Internet of Things (IoT) network. In an embodiment, the network 100 is a CoAP network.

The network 100 comprises a receiver 110 and a transmitter 120. In an embodiment, the receiver 110 comprises a client device. In an embodiment, the transmitter 120 comprises a server host device. The server host hosts a server software. The client device hosts a client software. The receiver 110 specified herein may be a CoAP client device. The transmitter 120 described herein may be CoAP server device. The network 100 may include more than a single receiver 110. The network 100 may include more than a single transmitter 120. The receiver 110, the transmitter 120 or the network 100, or all of the receiver 110, the transmitter 120 and the network 100 may be able of running a CoAP application. In an embodiment, the receiver 110 may use a CoAP multicast to one or more transmitter 120 (e.g., in a 802.15.4 subnet).

In an embodiment, the receiver 110 is a communication device in the form of an IoT device. The receiver 110 may be a device for use in one or more application domains, these domains comprising, but not limited to, home, city, wearable technology, extended reality, industrial application, and healthcare.

By way of example, the IoT device for a home, an office, a building or an infrastructure may be a baking scale, a coffee machine, a grill, a fridge, a refrigerator, a freezer, a microwave oven, an oven, a toaster, a water tap, a water heater, a water geyser, a sauna, a vacuum cleaner, a washer, a dryer, a dishwasher, a door, a window, a curtain, a blind, a furniture, a light bulb, a fan, an air-conditioner, a cooler, an air purifier, a humidifier, a speaker, a television, a laptop, a personal computer, a gaming console, a remote control, a vent, an iron, a steamer, a pressure cooker, a stove, an electric stove, a hair dryer, a hair styler, a mirror, a printer, a scanner, a photocopier, a projector, a hologram projector, a 3D printer, a drill, a hand-dryer, an alarm clock, a clock, a security camera, a smoke alarm, a fire alarm, a connected doorbell, an electronic door lock, a lawnmower, a thermostat, a plug, an irrigation control device, a flood sensor, a moisture sensor, a motion detector, a weather station, an electricity meter, a water meter, and a gas meter.

By further ways of example, the IoT device for use in a city, urban, or rural areas may be connected street lighting, a connected traffic light, a traffic camera, a connected road sign, an air control/monitor, a noise level detector, a transport congestion monitoring device, a transport controlling device, an automated toll payment device, a parking payment device, a sensor for monitoring parking usage, a traffic management device, a digital kiosk, a bin, an air quality monitoring sensor, a bridge condition monitoring sensor, a fire hydrant, a manhole sensor, a tarmac sensor, a water fountain sensor, a connected closed circuit television, a scooter, a hoverboard, a ticketing machine, a ticket barrier, a metro rail, a metro station device, a passenger information panel, an onboard camera, and other connected device on a public transport vehicle.

As further way of example, the communication IoT device may be a wearable device, or a device related to extended reality, wherein the device related to extended reality may be a device related to augmented reality, virtual reality, merged reality, or mixed reality. Examples of such IoT devices may be a smart-band, a tracker, a haptic glove, a haptic suit, a smartwatch, clothes, eyeglasses, a head mounted display, an ear pod, an activity monitor, a fitness monitor, a heart rate monitor, a ring, a key tracker, a blood glucose meter, and a pressure meter.

As further ways of example, the IoT device may be an industrial application device wherein an industrial application device may be an industrial unmanned aerial vehicle, an intelligent industrial robot, a vehicle assembly robot, and an automated guided vehicle.

As further ways of example, the IoT device may be a transportation vehicle, wherein a transportation vehicle may be a bicycle, a motor bike, a scooter, a moped, an auto rickshaw, a rail transport, a train, a tram, a bus, a car, a truck, an airplane, a boat, a ship, a ski board, a snowboard, a snow mobile, a hoverboard, a skateboard, roller-skates, a vehicle for freight transportation, a drone, a robot, a stratospheric aircraft, an aircraft, a helicopter and a hovercraft.

As further ways of example, the IoT device may be a health or fitness device, wherein a health or fitness device may be a surgical robot, an implantable medical device, a non-invasive medical device, and a stationary medical device which may be: an in-vitro diagnostic device, a radiology device, a diagnostic imaging device, and an x-ray device.

In an embodiment, the transmitter 120 is a communication device in the form of an IoT device. The transmitter 120 may be a device for use in one or more application domains, these domains comprising, but not limited to, home, city, wearable technology, extended reality, industrial application, and healthcare.

By way of example, the IoT device for a home, an office, a building or an infrastructure may be a baking scale, a coffee machine, a grill, a fridge, a refrigerator, a freezer, a microwave oven, an oven, a toaster, a water tap, a water heater, a water geyser, a sauna, a vacuum cleaner, a washer, a dryer, a dishwasher, a door, a window, a curtain, a blind, a furniture, a light bulb, a fan, an air-conditioner, a cooler, an air purifier, a humidifier, a speaker, a television, a laptop, a personal computer, a gaming console, a remote control, a vent, an iron, a steamer, a pressure cooker, a stove, an electric stove, a hair dryer, a hair styler, a mirror, a printer, a scanner, a photocopier, a projector, a hologram projector, a 3D printer, a drill, a hand-dryer, an alarm clock, a clock, a security camera, a smoke alarm, a fire alarm, a connected doorbell, an electronic door lock, a lawnmower, a thermostat, a plug, an irrigation control device, a flood sensor, a moisture sensor, a motion detector, a weather station, an electricity meter, a water meter, and a gas meter.

By further ways of example, the IoT device for use in a city, urban, or rural areas may be connected street lighting, a connected traffic light, a traffic camera, a connected road sign, an air control/monitor, a noise level detector, a transport congestion monitoring device, a transport controlling device, an automated toll payment device, a parking payment device, a sensor for monitoring parking usage, a traffic management device, a digital kiosk, a bin, an air quality monitoring sensor, a bridge condition monitoring sensor, a fire hydrant, a manhole sensor, a tarmac sensor, a water fountain sensor, a connected closed circuit television, a scooter, a hoverboard, a ticketing machine, a ticket barrier, a metro rail, a metro station device, a passenger information panel, an onboard camera, and other connected device on a public transport vehicle.

As further way of example, the communication IoT device may be a wearable device, or a device related to extended reality, wherein the device related to extended reality may be a device related to augmented reality, virtual reality, merged reality, or mixed reality. Examples of such IoT devices may be a smart-band, a tracker, a haptic glove, a haptic suit, a smartwatch, clothes, eyeglasses, a head mounted display, an ear pod, an activity monitor, a fitness monitor, a heart rate monitor, a ring, a key tracker, a blood glucose meter, and a pressure meter.

As further ways of example, the IoT device may be an industrial application device wherein an industrial application device may be an industrial unmanned aerial vehicle, an intelligent industrial robot, a vehicle assembly robot, and an automated guided vehicle.

As further ways of example, the IoT device may be a transportation vehicle, wherein a transportation vehicle may be a bicycle, a motor bike, a scooter, a moped, an auto rickshaw, a rail transport, a train, a tram, a bus, a car, a truck, an airplane, a boat, a ship, a ski board, a snowboard, a snow mobile, a hoverboard, a skateboard, roller-skates, a vehicle for freight transportation, a drone, a robot, a stratospheric aircraft, an aircraft, a helicopter and a hovercraft.

As further ways of example, the IoT device may be a health or fitness device, wherein a health or fitness device may be a surgical robot, an implantable medical device, a non-invasive medical device, and a stationary medical device which may be: an in-vitro diagnostic device, a radiology device, a diagnostic imaging device, and an x-ray device.

The receiver 110 and the transmitter 120 are capable of transmitting CoAP messages. The CoAP messages exchanged between the receiver 110 and the transmitter 120 comprise a CoAP header such as the one presented in Table 1. In an embodiment, the MID of the CoAP header is modified to obtain the modified header field.

The modified header field already described herein may be used for CoAP request and/response messages or in a notification scenario with a CoAP Observe option, as described in RFC 7641. The CoAP Observe option enables for a receiver 110 to subscribe to events on a transmitter 120, whenever a state of a resource changes. In other words, the receiver 110 subscribed to a list of subscribers for a particular resource. When a change of the particular resource occurs, the transmitter 120 notifies the receiver 110, as it is on the list of subscribers for this particular resource. The receiver 110 may subscribe to more than one list of subscribers, thus the receiver 110 may be notified by more than one transmitter 120 when a resource changes.

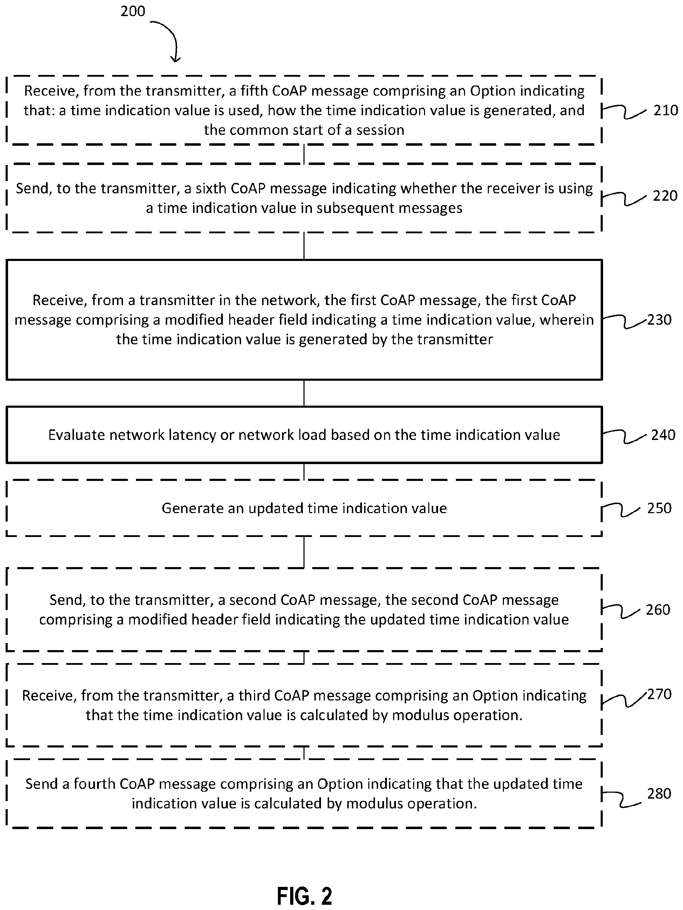

In **Figure 2****,** a flowchart depicting embodiments of a method 200 performed by the receiver 110 for receiving a first CoAP message, is provided.

The method 200 comprises receiving 230, from the transmitter 120 in the network 110, the first CoAP message, the first CoAP message comprising the modified header field indicating a time indication value, wherein the time indication value is generated by the transmitter 120. The modified header field is defined above. The time indication value is defined above.

The method 200 comprises evaluating 240 network latency or network load based on the time indication value. Network latency is delay in communication over the network 100. The network latency may be an amount of time needed for a CoAP message to be transmitted, processed through the receiver 110 or the transmitter 120, and/or received. The network load may be processing latency of the transmitter 120, an amount of time the transmitter 120 processes a CoAP message.

For example, the receiver 110 evaluates the network latency or network load processing latency, time based on one or more of:
- a common start of the session - in this example, the common start of the session is named, for illustrative purposes, T;
- the time indication value of the first CoAP message generated by the transmitter 120 received in step 230 of method 200- in this example, the time indication value is named, for illustrative purposes, t1;
- the time of receiving by the receiver 110, the first CoAP message sent by the transmitter 120 - in this example, the time of receiving the first CoAP message is named, for illustrative purposes, t2;
- the updated time indication value of a second CoAP message generated by the receiver 110 in step 250 of method 200 - in this example, the updated time indication value is named, for illustrative purposes, t3;
- the time of sending by the receiver 110, the second CoAP message in step 260 of the method 200 - in this example, the time of sending the of generating by the receiver 110, a second CoAP message is named, for illustrative purposes, t4;
- the time indication value of a subsequent CoAP message generated by the transmitter 120 - in this example, the time indication value of the subsequent CoAP message is named, for illustrative purposes, t5;
- the time of receiving by the receiver 110 the subsequent CoAP message sent by the transmitter 120 - in this example, the time of receiving the subsequent COAP message is named, for illustrative purposes, t6.

In particular, the receiver 110 evaluates one or more of:
- a time when data was generated by the transmitter 120, e.g. T+t1;
- network latency for receiving the first CoAP message, e.g. t2-t1.
- network load at the transmitter 120, e.g. (t5-t3)-(t6-t3).

In an embodiment, the method 200 may comprise generating 250 an updated time indication value.

In an embodiment, the method 200 may comprise sending 260, to the transmitter 120, a second CoAP message, the second CoAP message comprising an updated modified header field indicating the updated time indication value. In particular, the method 200 may comprise the receiver 110 generating in step 250 an updated time indication value by using the current time.

In an embodiment, the modified header field of the first CoAP message is a MID header field as is defined above.

In an embodiment, the modified header field of the second CoAP message is an MID header field as defined above.

In an embodiment, the first CoAP message is a CoAP request message. In another embodiment, the first CoAP message is a CoAP response message.

In an embodiment, the second CoAP message is a CoAP request message. In another embodiment, the second CoAP message is a CoAP response message.

In an embodiment, the first CoAP message, received in step 230 of the method 200, includes a request from the transmitter to use the modified header field.

In an embodiment, the time indication value corresponds to a quantity of time passed from a common start of a session. In an embodiment, the common start of a session is a point in time at which a previous message is sent by the receiver 110. In another embodiment, the common start of a session is a point in time at which a first message at CoAP layer is exchanged between the receiver 110 and the transmitter 120.

In an embodiment, the updated time indication value corresponds to a quantity of time passed from the common start of a session. For example, the common start of a session is the time in point at which an initial CoAP message is exchanged between the receiver 110 and the transmitter 120, this common start of a session is timed at 11:52 CET. In this same example, the time indication value of the first CoAP message received, in step 230, indicates that 2 minutes have elapsed from the common start of a session. In this same example, the updated time indication of the second CoAP message sent, in step 260, indicates that 5 minutes have elapsed from the common start of a session. In other words, the time indication value and the updated time indication value are indicating the quantity of time elapsed from the common start of a session. The updated time indication value is generated, in step 250 of method 200, after the time indication value, and thus the updated time indication may be greater than the time indication value. In an embodiment, the time indication value and the updated time indication value may be the same (e.g., when granularity of the time indication value and the updated time indication value is in minutes).

The updated time indication value generated in step 250 is generated depending on use case. Flexibility regarding the implementation of the updated time indication value exists. For example, some applications may have a duration in the range of minutes or hours, where time synchronization resolution requirements might not be high. Wherein, for example, other applications may have time synchronization resolution requirements at milliseconds. As the MID header field is only 2 bytes (i.e. 16 bits of the MID header field allow for a maximum of 65535 values), developers may choose the generating algorithm that suits the application requirements. In the following, various generating algorithms are presented.

The quantity of time recorded from the common start of the session may be 18 hours, when the time indication value is measured in seconds. Different embodiments of how the time indication value is generated are presented below. Different embodiments of how the updated time indication value is generated, in step 250 of method 200, are presented below.

In an embodiment, the time indication value represents a quantity of seconds from the common start of the session. In an embodiment, the updated time indication value represents a quantity of seconds from the common start of the session.

In an embodiment, the time indication value includes 5 bits corresponding to a quantity of days, and/or 5 bits corresponding to a quantity of hours, and/or 6 bits corresponding to a quantity of minutes from the common start of the session. In an embodiment, the updated time indication value includes 5 bits corresponding to a quantity of days, and/or 5 bits corresponding to a quantity of hours, and/or 6 bits corresponding to a quantity of minutes, from the common start of the session. **In** other words, 5 bits for days may cover 0 to 32 days, 5 bits for hours may cover 0 to 24 hours, and 6 bits for minute may cover 0 to 60 minutes, from the common start of the session.

**In** an embodiment, the time indication value includes 6 bits corresponding to a quantity of second, and/or 10 bits corresponding to a quantity of milliseconds, from the common start of the session. **In** an embodiment, the updated time indication value includes 6 bits corresponding to a quantity of second, and/or 10 bits corresponding to a quantity of milliseconds. **In** other words, 6 bits for seconds may cover 0 to 64 seconds, and 10 bits for milliseconds may cover 0 to 1000 milliseconds, from the common start of the session.

**In** an embodiment, the time indication value is calculated by a modulus operation on the time indication value. **In** an embodiment, the updated time indication value is calculated by a modulus operation on the updated time indication value. **In** particular, if the chosen implementation of the generation of the time indication value, or of the updated time indication value, does not cover the full quantity of time from the common start of the session, then the updated time indication value could wrap-around. **In** other words, once a theoretical 17^{th} bit of the updated time indication value changes the time indication value appended in the modified header field, the updated time indication value will not be greater than the time indication value received in step 230 of method 200. Instead, the updated time indication value will be seen as if starting from zero. For example, if the time indication value of step 230 jumps from a high 16 bit value to a low 16 bit value, it may indicate that the transmitter 120 has performed a modulus operation on the time indication value before transmitting it, as the time indication value was not fitting in the 16bits of the **MID** header field.

**In** an embodiment, the time indication value and the updated time indication value are generated by the same generating algorithm. **In** another embodiment, the time indication value and the updated time indication value are generated by different generating algorithms.

In an embodiment, the method 200 may comprise receiving 270, from the transmitter 120, a third CoAP message comprising a CoAP Option indicating that the time indication value is calculated by modulus operation. In an embodiment, the CoAP Option corresponds to the CoAP Option **MIDt** described above. In an embodiment, the Option indicating that the time indication value is calculated by modulus operation may be comprised in the first CoAP message received in step 230 of the method 200.

In an embodiment, the method 100 may comprise sending 280 a fourth CoAP message comprising an Option indicating that the updated time indication value is calculated by modulus operation. In particular, the fourth CoAP message explicitly indicates that the updated time indication value is wrapped around. In an embodiment, the CoAP Option corresponds to the CoAP Option **MIDt** as described above. In an embodiment, the Option indicating that the updated time indication value is calculated by modulus operation may be comprised in the second CoAP message sent in step 260 of the method 200.

In an embodiment, the method 200 may comprise receiving 210, from the transmitter 120, a fifth CoAP message comprising an Option indicating that: a time indication value is used, how the time indication value is generated, and the common start of a session. In an embodiment, the fifth CoAP message of step 210 is indicating that the transmitter 120 is requesting the receiver 110 to send an updated time indication value. In an embodiment, the fifth CoAP message is used during session establishment between the receiver 110 and the transmitter, to inform how the time indication value is generated, such as in step 250. In an embodiment, the Option comprised in the fifth CoAP message corresponds to the CoAP Option **MIDt** defined above.

In an embodiment, the method 200 may comprise sending 220, to the transmitter 120, a sixth CoAP message indicating whether the receiver is using an updated time indication value in subsequent messages. In an embodiment, the sixth CoAP message is an acknowledgement (ACK) message. In an embodiment, the sixth CoAP message is a CoAP response message. In an embodiment, the sixth CoAP message is a CoAP request message.

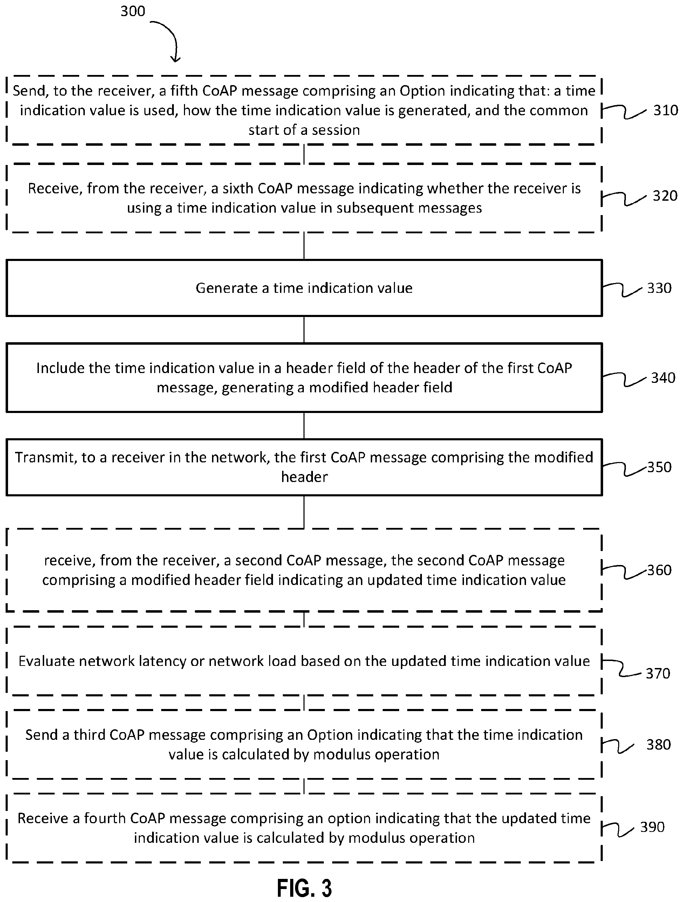

In **Figure** 3, a method 300 for providing a first CoAP message comprising a header is provided. The method 300 is performed by the transmitter 120 in the network 100. The method 300 comprises generating 330 a time indication value. The generating of step 330 is performed in a similar manner as described above in relation to the generating 250 of the updated time indication value in method 200.

The method 300 comprises including 340 the time indication value in a header field of the header of the first CoAP message, thus generating a modified header field. The modified header field corresponds to the modified header field as defined above. The time indication value corresponds to the time indication value as defined above. In an embodiment, the modified header field of the first CoAP message is a MID header field. In an embodiment, the first CoAP message of method 300 is a CoAP request message. In an embodiment, the first CoAP message of method 300 is a CoAP response message.

The method 300 comprises transmitting 350, to a receiver 120 in the network 100, the first CoAP message comprising the modified header field. The first CoAP message in method 300 corresponds to the first CoAP message received in step 230 of method 200.

In an embodiment, the method 300 may comprise receiving 360, from the receiver 110, a second CoAP message, the second CoAP message comprising an updated modified header indicating an updated time indication value. The second CoAP message corresponds to the second message of step 260 of method 200. In an embodiment, the updated modified header field of the second CoAP message is an MID header field. In an embodiment, the second CoAP message is a CoAP request message. In an embodiment, the second CoAP message is a CoAP response message.

In an embodiment, the first CoAP message, transmitted in step 350 of method 300, includes a request to use the modified header field.

In an embodiment, the time indication value of the first CoAP message (e.g., the first CoAP message in step 230 of method 200, or step 340 of method 300) corresponds to a quantity of time passed from a common start of a session. In an embodiment, the common start of a session is a point in time at which a previous message is sent by the transmitter 120. In another embodiment, the common start of a session is a point in time at which a first message at CoAP layer is exchanged between the receiver 110 and the transmitter 120.

In an embodiment, the updated time indication value of the second CoAP message (e.g., the second CoAP message in step 260 of method 200, or step 360 of method 300) corresponds to a quantity of time passed from the common start of a session. For example, the common start of a session is the time in point at which an initial CoAP message is exchanged between the receiver 110 and the transmitter 120, this common start of a session is timed at 11:52 CET. In this same example, the time indication value of the first CoAP message received, in step 230, indicates that 2 minutes have elapsed from the common start of a session. In this same example, the updated time indication of the second CoAP message sent, in step 260, indicates that 5 minutes have elapsed from the common start of a session. In other words, the time indication value and the updated time indication value are indicating the quantity of time elapsed from the common start of a session. The updated time indication value is generated, in step 250 of method 200, after the time indication value, and thus the updated time indication may be greater than the time indication value. In an embodiment, the time indication value and the updated time indication value may be the same (e.g., when granularity of the time indication value and the updated time indication value is in minutes).

The updated time indication value generated in step 250 of method 200 or step 330 of method 300 is generated depending on use case. Flexibility regarding the implementation of the updated time indication value exists. For example, some applications may have a duration in the range of minutes or hours, where time synchronization resolution requirements might not be high. Wherein, for example, other applications may have time synchronization resolution requirements at milliseconds. As the MID header field is only 2 bytes (i.e. 16 bits of the MID header field allow for a maximum of 65535 values), developers may choose the algorithm that suits the application requirements.

The quantity of time recorded from the common start of the session may be 18 hours, when the time indication value is measured in seconds. Different embodiments of how the time indication value is generated are presented below. Different embodiments of how the updated time indication value is generated, in step 250 of method 200 or step 330 of method 300, are presented below.

In an embodiment, the time indication value represents a quantity of seconds from the common start of the session. In an embodiment, the updated time indication value represents a quantity of seconds from the common start of the session.

In an embodiment, the time indication value includes 5 bits corresponding to a quantity of days, and/or 5 bits corresponding to a quantity of hours, and/or 6 bits corresponding to a quantity of minutes from the common start of the session. In an embodiment, the updated time indication value includes 5 bits corresponding to a quantity of days, and/or 5 bits corresponding to a quantity of hours, and/or 6 bits corresponding to a quantity of minutes, from the common start of the session. In other words, 5 bits for days may cover 0 to 32 days, 5 bits for hours may cover 0 to 24 hours, and 6 bits for minute may cover 0 to 60 minutes, from the common start of the session.

In an embodiment, the time indication value includes 6 bits corresponding to a quantity of second, and/or 10 bits corresponding to a quantity of milliseconds, from the common start of the session. In an embodiment, the updated time indication value includes 6 bits corresponding to a quantity of second, and/or 10 bits corresponding to a quantity of milliseconds. In other words, 6 bits for seconds may cover 0 to 64 seconds, and 10 bits for milliseconds may cover 0 to 1000 milliseconds, from the common start of the session.

In an embodiment, the time indication value is calculated by a modulus operation on the time indication value. In an embodiment, the updated time indication value is calculated by a modulus operation on the updated time indication value. In particular, if the chosen implementation of the generation of the time indication value, or of the updated time indication value, does not cover the full quantity of time from the common start of the session, then the updated time indication value could wrap-around. In other words, once a theoretical 17^{th} bit of the updated time indication value changes the time indication value appended in the modified header field, the updated time indication value will not be greater than the time indication value received in step 230 of method 200. Instead, the updated time indication value will be seen as if starting from zero. For example, if the time indication value of step 350 jumps from a high 16 bit value to a low 16 bit value, it may indicate that the transmitter 120 has performed a modulus operation on the time indication value before transmitting it, as the time indication value was not fitting in the 16bits of the MID header field.

In an embodiment, the time indication value and the updated time indication value are generated following the same generating algorithm. In another embodiment, the time indication value and the updated time indication value are generated by different generating algorithms.

In an embodiment, the method 300 comprises evaluating 370 network latency or network load at the receiver 110 based on the updated indication value. Network latency is delay in communication over the network 100. The network latency may be an amount of time needed for a CoAP message to be transmitted, processed through the receiver 110 or the transmitter 120, and/or received. The network load at the receiver 110 may be processing latency of the receiver 110, an amount of time the receiver 110 processes a CoAP message.

For example, the transmitter 120 evaluates the network latency or network load at the receiver 110, time based on one or more of:
- the common start of the session - in this example, the common start of the session is named, for illustrative purposes, T;
- the time indication value of the first CoAP message generated by the transmitter in step 350 of method 300 - in this example, the time indication value is named, for illustrative purposes, t1;
- the updated time indication value of the second CoAP message generated by the receiver 110 in step 250 of method 200 - in this example, the updated time indication value is named, for illustrative purposes, t2; and
- a time of receiving by the transmitter 120, the second CoAP message comprising the modified header field generated by the receiver 110 - in this example, the time of receiving the second CoAP message is named, for illustrative purposes, t3.

In particular, the transmitter 120 evaluates one or more of:
- a time when data was generated by the receiver 110, e.g. T+t2;
- a time from sending the first CoAP message to receiving the second CoAP message (e.g., a time from sending a CoAP request message to receiving a CoAP response message) e.g. t3-t1;
- network latency for receiving the second CoAP message, e.g. t3-t2;
- time of delivery of the first CoAP message and time to generate the second CoAP message by the receiver 110, e.g. t2-t1
- network load at the receiver 110, e.g. (t2-t1)-(t3-t2).

In another embodiment, the evaluation of the network latency in step 370 of method 300 is performed in a similar manner as described in step 240 of method 200 in relation to the receiver 110 evaluating network latency.

In an embodiment, the method 300 may comprise sending 380 a third CoAP message comprising an Option indicating that the time indication value is calculated by modulus operation. In an embodiment, the CoAP Option is the CoAP Option MIDt described above. The third CoAP message corresponds to the third CoAP message received by the receiver 110 in step 270 of method 200. In an embodiment, the Option indicating that the time indication value is calculated by modulus operation may be comprised in the first CoAP message transmitted in step 350 of the method 300.

In an embodiment, the method 300 may comprise receiving 390, from the receiver 110, a fourth CoAP message comprising an Option indicating that the updated time value is calculated by modulus operation. In an embodiment, the CoAP Option is the CoAP Option MIDt described above. The fourth CoAP message corresponds to the fourth CoAP message sent by the receiver 110 in step 280 of method 200. In an embodiment, the Option indicating that the updated time indication value is calculated by modulus operation may be comprised in the second CoAP message received in step 360 of the method 300.

In an embodiment, the method 300 may comprise sending 310, to the receiver 110, a fifth CoAP message comprising an Option indicating that: a time indication value is used, how the time indication value is used, and the common start of the session. In an embodiment, the CoAP Option is the COAP Option MIDt described above. The fifth CoAP message corresponds to the fifth CoAP message received by the receiver 110 in step 210 in method 200.

In an embodiment, the method 300 may comprise receiving 320, from the receiver 110, a sixth CoAP message indicating whether the receiver 110 is using a time indication value in subsequent messages. The sixth message corresponds to the sixth message of step 220 of method 200. In an embodiment, the sixth message is an acknowledgement (ACK) message. In an embodiment, the sixth message is a CoAP response message. In an embodiment, the sixth message is a CoAP request message.

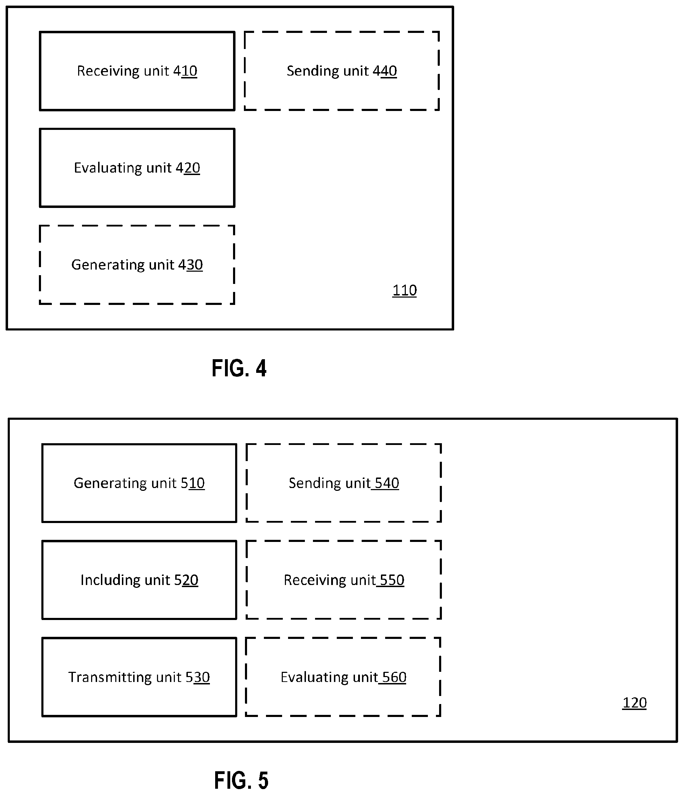

In **Figure 4****,** a block diagram of the receiver 110 for receiving a CoAP message is provided. The receiver 110 comprises a receiving unit 410, and an evaluating unit 420.

The receiver unit 410 is configured to perform the step 210, the step 230, and the step 270 of the method 200 as described above.

The evaluating unit 420 is configured to perform the step 240 of the method 200 as described above.

In an embodiment, the receiver 110 comprises a generating unit 430. The generating unit 430 is configured to perform the step 250 of the method 200 as described above.

In an embodiment, the receiver 110 comprises a sending unit 440. The sending unit 440 is configured to perform the step 220, the step 260, and the step 280 of method 200 as described above.

In an embodiment, the evaluating unit 420, and the generating unit 430 are a same unit. In an embodiment, the receiving unit 410 and the sending unit 440 are a same unit, such as a transceiver unit.

The receiving unit 410, the evaluating unit 420, the generating unit 430, and the sending unit 440 may be implemented as a hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above with regards to the method 200.

In **Figure 5****,** a block diagram of the transmitter 120 for providing a CoAP message comprising a header is provided. The transmitter 120 comprises a generating unit 510, an including unit 520, and a transmitting unit 530.

The generating unit 510 is configured to perform the step 330 of the method 300 as described above.

The including unit 520 is configured to perform the step 340 of the method 300 as described above.

The transmitting unit 530 is configured to perform the step 350 of the method 300 as described above.

In an embodiment, the transmitter 120 comprises a sending unit 540. The sending unit 540 is configured to perform the step 310, and the step 380 of method 300 as described above.

In an embodiment, the transmitter 120 comprises a receiving unit 550. The receiving unit 550 is configured to perform the step 320, the step 360, and the step 390 of the method 300 as described above.

In an embodiment, the transmitter 120 comprises an evaluating unit 560. The evaluating unit 560 is configured to perform the step 370 of the method 300 as described above.

In an embodiment, the generating unit 510, the including unit 520, and the evaluating unit 560 are a same unit. In an embodiment, the transmitting unit 530, the sending unit 540, and the receiving unit 550 are a same unit, such as a transceiver unit.

The generating unit 510, the including unit 520, the transmitting unit 530, the sending unit 540, the receiving unit 550, and the evaluating unit 560 may be implemented as a hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above with regards to the method 300.

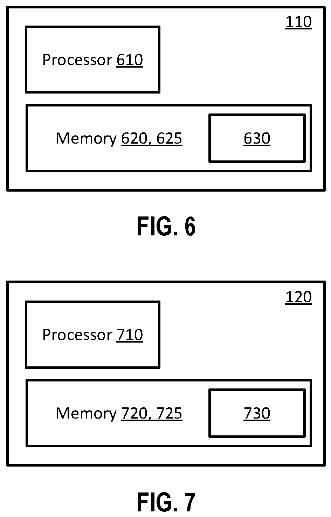

**In** **Figure 6****,** an embodiment of the receiver 110 is provided. The receiver 110 comprises a processor 610, and a computer readable storage medium 620 in the form of a memory 625. The memory 625 contains a computer program 630 comprising instructions executable by the processor 610 whereby the receiver 110 is operative to perform the steps of the method 200.

**In** **Figure 7****,** an embodiment of the transmitter 120 is provided. The transmitter 120 comprises a processor 710, and a computer readable storage medium 720 in the form of a memory 725. The memory 725 contains a computer program 730 comprising instructions executable by the processor 710 whereby the transmitter 120 is operative to perform the steps of the method 300.

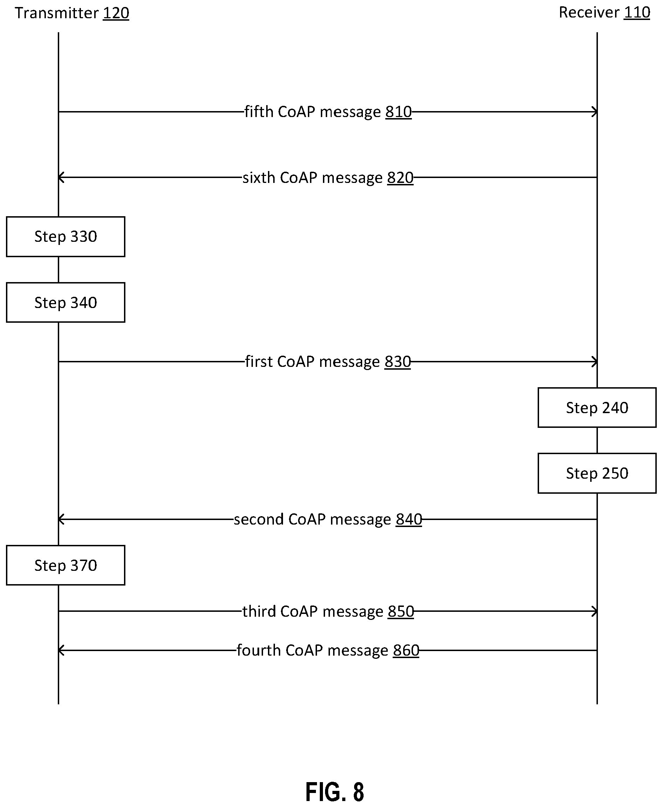

In **Figure 8****,** an illustrative example of messages exchanged between the receiver 110 and the transmitter 120, and operations performed by either the receiver 110 and/or the transmitter 120, according to embodiments is provided.

The transmitter 120 is configured to send a fifth CoAP message 810 to the receiver 110. In an embodiment, the fifth CoAP message 810 corresponds to the fifth CoAP message sent in step 310 of the method 300, and the fifth CoAP message received in step 210 of the method 200.

The receiver 110 is configured to a sixth CoAP message 820 to the transmitter 120. In an embodiment, the sixth CoAP message 820 corresponds to the sixth CoAP message sent in step 220 of the method 200, and the sixth CoAP message received in step 320 of the method 300.

The transmitter 120 is configured to perform step 330 of the method 300.

The transmitter 120 is configured to perform step 340 of the method 300.

The transmitter 120 is configured to transmit a first CoAP message 830. In an embodiment, the first CoAP message 830 corresponds to the first CoAP message transmitted in step 350 of the method 300, and the first CoAP message received in step 230 of the method 200.

The receiver 110 is configured to perform step 240 of the method 200.

The receiver 110 is configured to perform step 250 of the method 200.

The receiver 110 is configured to send a second CoAP message 840. In an embodiment, the second CoAP message 840 corresponds to the second CoAP message sent in step 260 of the method 200, and the second CoAP message received in step 360 in the method 300.

The transmitter 120 is configured to perform step 370 of the method 300.

The transmitter 120 is configured to send a third CoAP message 850. In an embodiment, the third CoAP message 850 corresponds to the third CoAP message sent in step 380 of the method 300, and the third CoAP message received in step 270 of the method 200.

The receiver 110 is configured to send a fourth CoAP message 860. In an embodiment, the fourth CoAP message 840 corresponds to the fourth CoAP message sent in step 280 of the method 200, and the fourth CoAP message received in step 390 in the method 300.

The (non-transitory) computer readable storage media mentioned above may be an Electrically Erasable Programmable Read-Only Memory (EEPROM), a flash memory, Field Programmable Gate Array, and a hard drive.

The processor 610 of Figure 6, and the processor of Figure 7, may be a single CPU (Central processing unit), but could also comprise two or more processing units. For example, the processor 610 of Figure 6, and the processor 710 of Figure 7 may include general purpose microprocessors; instructions set processors and/or related chips sets and/or special purpose microprocessors such as Application Specific Integrated Circuit (ASICs). The processor 610 of Figure 6 and the processor 710 of Figure 7 may also comprise board memory for caching purposes.

The computer program 630 of Figure 6, and the computer program 730 of Figure 7 may be carried by a computer program product connected to the processor 610 of Figure 6, and the processor 710 of Figure 7. The computer program products may be or comprise a non-transitory computer readable storage medium on which the computer programs 630 of Figure 6 and the computer program 730 of Figure 7 are stored. For example, the computer program products may be a flash memory, a Random-access memory (RAM), a Read-Only memory (ROM), or an EEPROM, and the computer programs described above could in alternative embodiments be distributed on different computer program products in the form of memories.

It shall be understood that although the terms "first", "second", etc. may be used herein to describe various elements, these elements should not be limited by these terms. These terms are only used to distinguish one element from another. For example, the first CoAP message could be termed the second CoAP message, and similarly, the second CoAP message could be termed the first CoAP message.

As used herein, the term "and/or" includes any and all combinations of one or more of the associated listed terms. The terminology used herein is for the purpose of describing particular embodiments only and is not intended to be limited of example embodiments. As used herein, the single forms "a", "an", and "the" are intended to include the plural forms as well, unless the context clearly indicated otherwise. It will be further understood that the terms "comprises", "comprising", "has", "having", "includes", and/or "including", when used herein, specify the presence of stated features, elements, and/or components etc. but do not preclude the presence or addition of one or more other features, elements, components, and/or combinations thereof.

This disclosure has been described above in reference to embodiments thereof. It should be understood that various modifications, alternatives, and additions can be made by those skilled in the art without departing from the scope of the disclosure. Therefore, the scope of the disclosure is not limited to the above particular embodiments but only defined by the claims as attached.

## Claims

1. A method (200) performed by a receiver (110) in a network (100) for receiving a first constrained application protocol, CoAP, message, the method (200) comprising:
- receiving (230), from a transmitter (120) in the network (100), the first CoAP message, the first CoAP message comprising a modified header field indicating a time indication value wherein the time indication value is generated by the transmitter; and
- evaluating (240) network latency or network load based on the time indication value.

2. The method (200) according to claim 1 the method (200) comprising:
- generating (250) an updated time indication value; and
- sending (260), to the transmitter (120), a second CoAP message, the second CoAP message comprising a modified header field indicating the updated time indication value.

3. The method (200) according to any one or more of claims 1-2, wherein the modified header field of the first CoAP message is a message identity, MID, header field.

4. The method (200) according to any one or more of claims 2-3, wherein the modified header field of the second CoAP message is a message identity, MID, header field.

5. The method (200) according to any one or more of claims 1-4, wherein the first CoAP message is a CoAP request message or a CoAP response message.

6. A receiver (110) for a network (100) for receiving a first constrained application protocol, CoAP, message, the receiver (110) being configured to:
- receive, from a transmitter (120) in the network (100), the first CoAP message, the first CoAP message comprising a modified header field indicating a time indication value, wherein the time indication value is generated by the transmitter (120); and
- evaluate network latency or network load based on the time indication value.

7. The receiver (110) according to claim 6, wherein the receiver (110) is configured to perform the method according to any one of claims 2-5.

8. A method (300) performed by a transmitter (120) in a network (100) for providing a first constrained application protocol, CoAP, message comprising a header, the method (300) comprising:
- generating (330) a time indication value;
- including (340) the time indication value in a header field of the header of the first CoAP message, generating a modified header field; and
- transmitting (350), to a receiver (110) in the network (100), the first CoAP message comprising the modified header field.

9. The method (300) according to claim 8, the method (300) comprising:
- receiving (360), from the receiver (110), a second CoAP message, the second CoAP message comprising an updated modified header field indicating an updated time indication value; and
- evaluating (370) network latency or network latency based on the updated time indication value.

10. The method (300) according to any one or more of claims 8-9, wherein the modified header field of the first CoAP message is a message identity, MID, header field.

11. The method (300) according to any one or more of claims 9-10, wherein the updated modified header field of the second CoAP message is a message identity. MID, header field.

12. A transmitter (120) for a network (100) for providing a first constrained application protocol, CoAP, message comprising a header, wherein the transmitter (120) is configured to:
- generate a time indication value;
- include the time indication value in a header field of the header of the first CoAP message, generating a modified header field; and
- transmit, to a receiver (110) in the network (100), the first CoAP message comprising the modified header field.

13. The transmitter (120) of claim 12, wherein the transmitter (120) is configured to perform the method according to any one of claims 9-11.

14. A computer program (630) comprising instructions, which when executed by a receiver (110) in a network (100) for receiving a first constrained application protocol, CoAP, message, causes the receiver (110) to:
- receive, from a transmitter (120) in the network, the first CoAP message, the first CoAP message comprising a modified header field indicating a time indication value wherein the time indication value is generated by the transmitter (120); and
- evaluate network latency or network load based on the time indication value; or
when executed by a transmitter (120) in a network (100) for providing a first constrained application protocol, CoAP, message comprising a header, causes the transmitter (120) to:
- generate a time indication value;
- include the time indication value in a header field of the header of the first CoAP message, generating a modified header field; and
- transmit, to a receiver (110) in the network (100), the first CoAP message comprising the modified header field.

15. A computer readable storage medium comprising a computer program according to claim 14.

## Patentansprüche

1. Verfahren (200), das durch einen Empfänger (110) in einem Netzwerk (100) zum Empfangen einer ersten Constrained-Application-Protocol-Nachricht, CoAP-Nachricht, durchgeführt wird, wobei das Verfahren (200) Folgendes umfasst:
- Empfangen (230) der ersten CoAP-Nachricht von einem Sender (120) in dem Netzwerk (100), wobei die erste CoAP-Nachricht ein modifiziertes Header-Feld umfasst, das einen Zeitangabewert angibt, wobei der Zeitangabewert durch den Sender erzeugt wird; und
- Bewerten (240) einer Netzwerklatenz oder Netzwerklast basierend auf dem Zeitangabewert.

2. Verfahren (200) nach Anspruch 1, wobei das Verfahren (200) Folgendes umfasst:
- Erzeugen (250) eines aktualisierten Zeitangabewerts; und
- Senden (260) einer zweiten CoAP-Nachricht an den Sender (120), wobei die zweite CoAP-Nachricht ein modifiziertes Header-Feld umfasst, das den aktualisierten Zeitangabewert angibt.

3. Verfahren (200) nach einem oder mehreren der Ansprüche 1-2, wobei das modifizierte Header-Feld der ersten CoAP-Nachricht ein Nachrichtenidentitäts-Header-Feld, MID-Header-Feld, ist.

4. Verfahren (200) nach einem oder mehreren der Ansprüche 2-3, wobei das modifizierte Header-Feld der zweiten CoAP-Nachricht ein Nachrichtenidentitäts-Header-Feld, MID-Header-Feld, ist.

5. Verfahren (200) nach einem oder mehreren der Ansprüche 1-4, wobei die erste CoAP-Nachricht eine CoAP-Anforderungsnachricht oder eine CoAP-Antwortnachricht ist.

6. Empfänger (110) für ein Netzwerk (100) zum Empfangen einer ersten Constrained-Application-Protocol-Nachricht, CoAP-Nachricht, wobei der Empfänger (110) dazu konfiguriert ist:
- die erste CoAP-Nachricht von einem Sender (120) in dem Netzwerk (100) zu empfangen, wobei die erste CoAP-Nachricht ein modifiziertes Header-Feld umfasst, das einen Zeitangabewert angibt, wobei der Zeitangabewert durch den Sender (120) erzeugt wird; und
- eine Netzwerklatenz oder Netzwerklast basierend auf dem Zeitangabewert zu bewerten.

7. Empfänger (110) nach Anspruch 6, wobei der Empfänger (110) dazu konfiguriert ist, das Verfahren nach einem der Ansprüche 2-5 durchzuführen.

8. Verfahren (300), das durch einen Sender (120) in einem Netzwerk (100) zum Bereitstellen einer ersten Constrained-Application-Protocol-Nachricht, CoAP-Nachricht, umfassend einen Header, durchgeführt wird, wobei das Verfahren (300) Folgendes umfasst:
- Erzeugen (330) eines Zeitangabewerts;
- Beinhalten (340) des Zeitangabewerts in einem Header-Feld des Headers der ersten CoAP-Nachricht, Erzeugen eines modifizierten Header-Felds; und
- Senden (350) der ersten CoAP-Nachricht, umfassend das modifizierte Header-Feld, an einen Empfänger (110) in dem Netzwerk (100).

9. Verfahren (300) nach Anspruch 8, wobei das Verfahren (300) Folgendes umfasst:
- Empfangen (360) einer zweiten CoAP-Nachricht von dem Empfänger (110), wobei die zweite CoAP-Nachricht ein aktualisiertes modifiziertes Header-Feld umfasst, das einen aktualisierten Zeitangabewert angibt; und
- Bewerten (370) einer Netzwerklatenz oder Netzwerklatenz basierend auf dem aktualisierten Zeitangabewert.

10. Verfahren (300) nach einem oder mehreren der Ansprüche 8-9, wobei das modifizierte Header-Feld der ersten CoAP-Nachricht ein Nachrichtenidentitäts-Header-Feld, MID-Header-Feld, ist.

11. Verfahren (300) nach einem oder mehreren der Ansprüche 9-10, wobei das aktualisierte modifizierte Header-Feld der zweiten CoAP-Nachricht ein Nachrichtenidentitäts-Header-Feld, MID-Header-Feld, ist.

12. Sender (120) für ein Netzwerk (100) zum Bereitstellen einer ersten Constrained-Application-Protocol-Nachricht, CoAP-Nachricht, umfassend einen Header, wobei der Sender (120) dazu konfiguriert ist:
- einen Zeitangabewert zu erzeugen;
- den Zeitangabewert in einem Header-Feld des Headers der ersten CoAP-Nachricht zu beinhalten, Erzeugen eines modifizierten Header-Felds; und
- die erste CoAP-Nachricht, umfassend das modifizierte Header-Feld, an einen Empfänger (110) in dem Netzwerk (100) zu senden.

13. Sender (120) nach Anspruch 12, wobei der Sender (120) dazu konfiguriert ist, das Verfahren nach einem der Ansprüche 9-11 durchzuführen.

14. Computerprogramm (630), umfassend Anweisungen, welche bei Ausführung durch einen Empfänger (110) in einem Netzwerk (100) zum Empfangen einer ersten Constrained-Application-Protocol-Nachricht, CoAP-Nachricht, bewirken, dass der Empfänger (110):
- die erste CoAP-Nachricht von einem Sender (120) in dem Netzwerk empfängt, wobei die erste CoAP-Nachricht ein modifiziertes Header-Feld umfasst, das einen Zeitangabewert angibt, wobei der Zeitangabewert durch den Sender (120) erzeugt wird; und
- eine Netzwerklatenz oder Netzwerklast basierend auf dem Zeitangabewert bewertet; oder
bei Ausführung durch einen Sender (120) in einem Netzwerk (100) zum Bereitstellen einer ersten Constrained-Application-Protocol-Nachricht, CoAP-Nachricht, umfassend einen Header, bewirken, dass der Sender (120):
- einen Zeitangabewert erzeugt;
- den Zeitangabewert in einem Header-Feld des Headers der ersten CoAP-Nachricht beinhaltet, Erzeugen eines modifizierten Header-Felds; und
- die erste CoAP-Nachricht, umfassend das modifizierte Header-Feld, an einen Empfänger (110) in dem Netzwerk (100) sendet.

15. Computerlesbares Speichermedium, umfassend ein Computerprogramm nach Anspruch 14.

## Revendications

1. Procédé (200) réalisé par un récepteur (110) dans un réseau (100) pour recevoir un premier message de protocole d'application contraint, CoAP, le procédé (200) comprenant :
- la réception (230), en provenance d'un émetteur (120) dans le réseau (100), du premier message CoAP, le premier message CoAP comprenant un champ d'en-tête modifié indiquant une valeur d'indication de temps dans lequel la valeur d'indication de temps est générée par l'émetteur ; et
- l'évaluation (240) d'une latence de réseau ou d'une charge de réseau sur la base de la valeur d'indication de temps.

2. Procédé (200) selon la revendication 1, le procédé (200) comprenant :
- la génération (250) d'une valeur d'indication de temps mise à jour ; et
- l'envoi (260), à l'émetteur (120), d'un second message CoAP, le second message CoAP comprenant un champ d'en-tête modifié indiquant la valeur d'indication de temps mise à jour.

3. Procédé (200) selon l'une quelconque ou plusieurs des revendications 1 à 2, dans lequel le champ d'en-tête modifié du premier message CoAP est un champ d'en-tête d'identité de message, MID.

4. Procédé (200) selon l'une quelconque ou plusieurs des revendications 2 à 3, dans lequel le champ d'en-tête modifié du second message CoAP est un champ d'en-tête d'identité de message, MID.

5. Procédé (200) selon l'une quelconque ou plusieurs des revendications 1 à 4, dans lequel le premier message CoAP est un message de requête CoAP ou un message de réponse CoAP.

6. Récepteur (110) pour un réseau (100) pour recevoir un premier message de protocole d'application contraint, CoAP, le récepteur (110) étant configuré pour :
- recevoir, en provenance d'un émetteur (120) dans le réseau (100), le premier message CoAP, le premier message CoAP comprenant un champ d'en-tête modifié indiquant une valeur d'indication de temps, dans lequel la valeur d'indication de temps est générée par l'émetteur (120) ; et
- évaluer une latence de réseau ou une charge de réseau sur la base de la valeur d'indication de temps.

7. Récepteur (110) selon la revendication 6, dans lequel le récepteur (110) est configuré pour réaliser le procédé selon l'une quelconque des revendications 2 à 5.

8. Procédé (300) réalisé par un émetteur (120) dans un réseau (100) pour fournir un premier message de protocole d'application contraint, CoAP, comprenant un en-tête, le procédé (300) comprenant :
- la génération (330) d'une valeur d'indication de temps ;
- l'inclusion (340) de la valeur d'indication de temps dans un champ d'en-tête de l'en-tête du premier message CoAP, générant un champ d'en-tête modifié ; et
- la transmission (350), à un récepteur (110) dans le réseau (100), du premier message CoAP comprenant le champ d'en-tête modifié.

9. Procédé (300) selon la revendication 8, le procédé (300) comprenant :
- la réception (360), en provenance du récepteur (110), d'un second message CoAP, le second message CoAP comprenant un champ d'en-tête modifié mis à jour indiquant une valeur d'indication de temps mise à jour ; et
- l'évaluation (370) d'une latence de réseau ou d'une latence de réseau sur la base de la valeur d'indication de temps mise à jour.

10. Procédé (300) selon l'une quelconque ou plusieurs des revendications 8 à 9, dans lequel le champ d'en-tête modifié du premier message CoAP est un champ d'en-tête d'identité de message, MID.

11. Procédé (300) selon l'une quelconque ou plusieurs des revendications 9 à 10, dans lequel le champ d'en-tête modifié mis à jour du second message CoAP est un champ d'en-tête d'identité de message, MID.

12. Émetteur (120) pour un réseau (100) pour fournir un premier message de protocole d'application contraint, CoAP, comprenant un en-tête, dans lequel l'émetteur (120) est configuré pour :
- générer une valeur d'indication de temps ;
- inclure la valeur d'indication de temps dans un champ d'en-tête de l'en-tête du premier message CoAP, générant un champ d'en-tête modifié ; et
- transmettre, à un récepteur (110) dans le réseau (100), le premier message CoAP comprenant le champ d'en-tête modifié.

13. Émetteur (120) selon la revendication 12, dans lequel l'émetteur (120) est configuré pour réaliser le procédé selon l'une quelconque des revendications 9 à 11.

14. Programme informatique (630) comprenant des instructions, qui lorsqu'elles sont exécutées par un récepteur (110) dans un réseau (100) pour recevoir un premier message de protocole d'application contraint, CoAP, amène le récepteur (110) à :
- recevoir, en provenance d'un émetteur (120) dans le réseau, le premier message CoAP, le premier message CoAP comprenant un champ d'en-tête modifié indiquant une valeur d'indication de temps dans lequel la valeur d'indication de temps est générée par l'émetteur (120) ; et
- évaluer une latence de réseau ou une charge de réseau sur la base de la valeur d'indication de temps ; ou
lorsqu'elles sont exécutées par un émetteur (120) dans un réseau (100) pour fournir un premier message de protocole d'application contraint, CoAP, comprenant un en-tête, amènent l'émetteur (120) à :
- générer une valeur d'indication de temps ;
- inclure la valeur d'indication de temps dans un champ d'en-tête de l'en-tête du premier message CoAP, générant un champ d'en-tête modifié ; et
- transmettre, à un récepteur (110) dans le réseau (100), le premier message CoAP comprenant le champ d'en-tête modifié.

15. Support de stockage lisible par ordinateur comprenant un programme informatique selon la revendication 14.
